(19) Europäisches Patentamt / European Patent Office / Office européen des brevets

(11) **EP 4 438 340 B1**

(12) **EUROPEAN PATENT SPECIFICATION**

(45) Date of publication and mention
of the grant of the patent:
**27.05.2026   Bulletin 2026/22**

(21) Application number: **23166052.3**

(22) Date of filing: **31.03.2023**

(51) International Patent Classification (IPC):
*B60C 11/03* (2006.01)      *B60C 11/11* (2006.01)
*B60C 11/12* (2006.01)      *B60C 11/13* (2006.01)
*B60C 1/00* (2006.01)       *C08L 9/06* (2006.01)
*C08L 57/02* (2006.01)

(52) Cooperative Patent Classification (CPC):
(C-Sets available)
**B60C 11/0302; B60C 1/0016; B60C 11/0311;
B60C 11/11; B60C 11/12;** B60C 11/1392;
B60C 2011/0025; B60C 2011/0313;
B60C 2011/0337; B60C 2011/0339;
B60C 2011/0341; B60C 2011/0344;
B60C 2011/0346; B60C 2011/0358;
B60C 2011/0374                (Cont.)

(54) **TIRE WITH IMPROVED RUBBER COMPOUND**

REIFEN MIT VERBESSERTER KAUTSCHUKZUSAMMENSETZUNG

PNEU AVEC COMPOSÉ DE CAOUTCHOUC AMÉLIORÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**02.10.2024   Bulletin 2024/40**

(73) Proprietor: **Bridgestone Europe NV/SA**
**1930 Zaventem (BE)**

(72) Inventors:
• **BARTOLONI, Alessandra**
**00128 Rome (IT)**
• **PISCOPO, Guido**
**00128 Rome (IT)**

• **RODRIQUEZ, Giuseppe**
**00128 Rome (IT)**
• **FORTUNATO, Gaetano**
**00128 Rome (IT)**

(74) Representative: **Bardehle Pagenberg**
**Partnerschaft mbB**
**Patentanwälte Rechtsanwälte**
**Prinzregentenplatz 7**
**81675 München (DE)**

(56) References cited:
**EP-A1- 4 019 274       EP-A1- 4 134 248**
**WO-A1-2021/089964      WO-A1-2022/130143**

(52) Cooperative Patent Classification (CPC): (Cont.)

C-Sets
**C08L 9/06, C08L 9/00, C08L 93/04, C08L 47/00,
C08L 91/00, C08L 91/00, C08L 91/06, C08L 45/00,
C08K 3/36, C08K 3/04, C08K 3/22, C08K 5/09,
C08K 5/548, C08K 5/18, C08K 3/06, C08K 5/47,
C08K 5/31, C08K 5/40**

## Description

### Field of the disclosure

The present invention relates to a vehicle tire. One possible application of the disclosed tire relates to an all-season tire intended to equip a passenger vehicle or commercial van vehicles. The invention can also be applied to other tires, for example winter tires, summer tires or tires for off the road applications.

### Background

All-season tires - which are used here as a typical example to facilitate readability - are known for providing good grip on snow covered road surfaces while also providing good performance on dry and wet road surfaces. Such tires are intended for use throughout the year, such that changing between summer and winter tires is no longer necessary. WO 2021/089964 A1 discloses a tire comprising a directional tread which comprises two edges and a center separating said tread into two parts of substantially equal width, wherein said tread comprises, on one of the two parts of said tread, a plurality of specified block assemblies. EP 4 019 274 A1 relates to a tire comprising a rubber composition which contains, in specific amounts, a specified styrene-butadiene rubber, a butadiene rubber, silica, a specific low molecular weight butadiene rubber, a thermoplastic resin, and a plasticizer.

For example, all-season tires are known that comprise grooves that extend from a center of the tire's tread, i.e., from the equatorial plane of the tire, towards a shoulder of the tire. These grooves, which typically extend in substantial axial direction, are configured to deliver water from a contact patch of the tire with the road outwards to provide contact between tire blocks and the road surface. Contact between blocks and the road is necessary to provide friction which provides for lateral road holding and further allows a driver to control the movement of the vehicle by accelerating, breaking and/or steering.

Further, all-season tires are known that comprise sipes, which are incisions that are generally smaller than the grooves. Such sipes are typically intended to trap snow therein and provide additional edges to the tread profile, and thus are intended to increase snow performance.

However, while improving snow performance, sipes also reduce the stiffness of the tread pattern, thus impairing breaking performance especially on dry grounds. Thus, it is an object of the invention to provide a tire having a tread with the improved traction properties on snow-covered grounds while avoiding the loss of breaking performance on dry and wet grounds due to loss of block stiffness.

### Summary of the invention

This object is achieved by providing an improved vehicle tire according to the independent claim. Further embodiments are described in the dependent claims.

According to the invention, a tire for a vehicle comprising a tread is provided. The tread comprises a set of consecutive blocks arranged along a circumference of the tire, a plurality of first grooves arranged over the circumference of the tire, wherein each of the plurality of first grooves is arranged between two blocks of the set of consecutive blocks, and a plurality of sipes defining an edge ingredient, EI, corresponding to the ratio between a sum of projected lengths of the plurality of sipes in an axial direction, SAP, and the circumference of the tread, C, such that

$$EI = \frac{\sum SAP}{C}.$$

The EI is at least 2 and at most 20. The tread is made of a rubber composition having an elastic modulus E' at -20°C of at least 25 MPa and at most 45 MPa.

Such a tire provides good traction on snow-covered grounds which is provided mainly by having the EI in the specified range. A higher edge ingredient generally leads to better performance on snow-covered grounds, as it refers to a larger number of sipes which are capable of trapping snow therein and providing additional edges to increase snow traction of the tire. If the EI is chosen too high, i.e., above the specified range, the stiffness of the blocks is reduced too far to provide acceptable breaking performance on dry grounds. If the EI is chosen too small, i.e., below the specified range, not enough sipes are provided to reach acceptable snow performance.

However, even with an EI within the specified range, the stiffness of the blocks is reduced, impairing dry breaking performance. The inventors of the present invention found that stiffness lost by providing sipes in the specified EI can be balanced by manufacturing the tire from a rubber composition as specified in the present invention. Therefore, in the tire of the present invention, the material stiffness, i.e., the stiffness provided for by the rubber composition, synergizes with the structural stiffness, i.e., the stiffness provided by the pattern.

## Brief description of the Figures

Fig. 1 shows a sketch of a vehicle tire according to the present disclosure.
Fig. 2 illustrates a half tread profile of a tire according to the present disclosure.
Fig. 3 illustrates an exemplary embodiment of a V-shaped directional tread pattern according to the present disclosure.
Fig. 4 illustrates an exemplary embodiment of an S-shaped tread pattern according to the present disclosure.

## Detailed description

To overcome the disadvantages of the prior art as discussed above, the invention aims at providing sipes to the tread of the tire which are intended to trap snow therein and to provide an additional edge to improve snow traction. The provision of sipes however lowers the structural stiffness of the tread profile which impairs dry breaking performance of the tire. Therefore, the decrease in structural stiffness is balanced by an increase in material stiffness.

The inventors of the present invention found that the stiffness lost by providing sipes in the specified EI can be balanced by manufacturing the tire from a rubber composition having a specific elastic modulus E'. The parameter E' correlates with the stiffness. A rubber composition having an E' as specified in the present invention can be produced by using a resin component comprising a blend of hydrocarbons resins, including a rosinic resin and a terpenic resin in a specific ratio.

The increase in material stiffness can be achieved by manufacturing the tire from a rubber composition as specified.

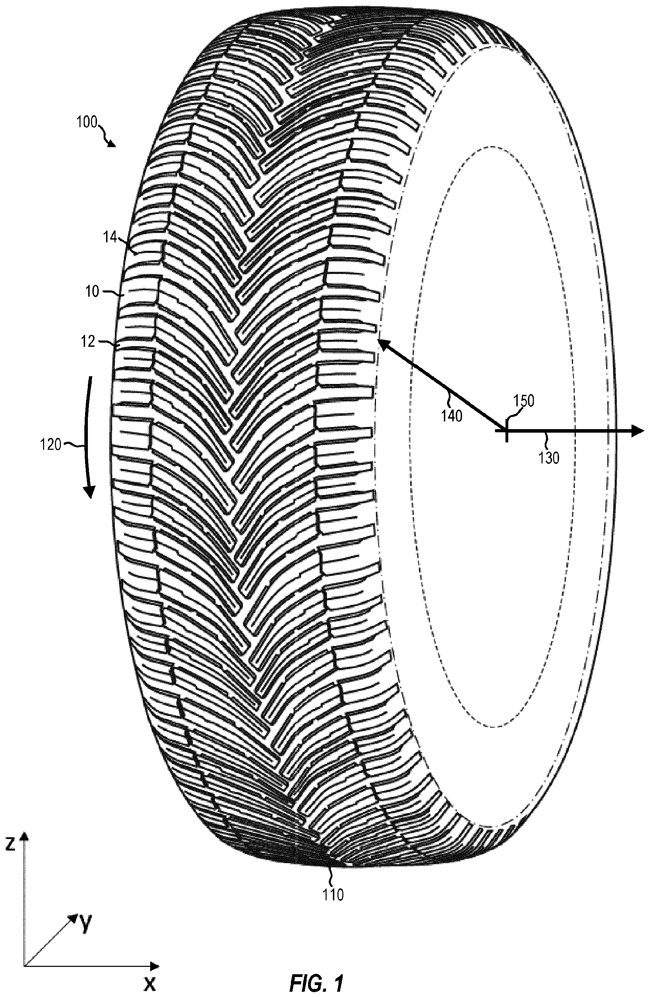

Fig. 1 shows a sketch of a vehicle tire according to the present disclosure.

According to Fig. 1, the tire 100 comprises a tread 110. The tread comprises a set of consecutive blocks 10 as well as grooves 12 arranged between two blocks 10 of the set of consecutive blocks. Moreover, a sipe 14 may be arranged within each of the set of consecutive blocks 10.

The blocks may be arranged consecutively a circumferential direction 120 of the tire.

A "groove" represents an incision in the tread pattern. A width of the groove may vary, for example, the first groove may be of larger width than the second groove, or may be of equal or even smaller width. For example, the width of a groove may be at least 2 mm. The width of a single groove does not necessarily have to be constant: For example, a groove can have a wider width towards the opening of the tread pattern, and a smaller width in radial inward direction. Also, a depth of a groove may vary, and sometimes a groove may extend at full tread depth (with the full tread depth being the maximum distance between the radially outermost part of the tire to the bottom of the deepest groove, measured in radial direction), but this does not necessarily have to be the case. For example a depth of least 1 mm, preferably at least 3 mm, is considered.

A "sipe" also represents an incision in the tread pattern. Reference herein to a "sipe" means an incision within a block, rather than a "groove" that separates blocks. For example, the width of sipe may also be smaller than the width of a groove, and be for example of less than 2 mm. Just as is the case for the groove, the width of a sipe does not have to be constant, and means can be applied to allow for a wider width towards the opening of the tread pattern, and a smaller width in radial inward direction. Also, a depth of a sipe may vary, and sometimes a sipe may extend at full tread block depth, but this does not necessarily have to be the case. For example, a depth of at least 1 mm, preferably at least 20% of the depth of the first grooves, is considered.

Within the context of the present disclosure, "circumferential direction" 120 means a direction perpendicular to an axial direction 130 which is parallel to the direction in which the tire usually rolls, i.e., parallel to a tangential direction with respect to the circumference of the tire. With respect to Fig. 1, the circumferential direction 120 is thus a direction which is within a plane parallel to the yz-plane.

Within the context of the present disclosure, "axial direction" 130 means a direction parallel to the direction of an axis of a vehicle on which the tire is usually mounted. Thus, according to Fig. 1, the axial direction 130 is parallel to the x-axis and thus perpendicular to the yz-plane.

Within the context of the present disclosure, "radial direction" 140 means a direction perpendicular to the axial direction. The radial direction is parallel to a connection of a center 150 of the tire with the tread surface. Thus, the radial direction is within a plane parallel to the yz-plane and generally perpendicular to the axial direction 130 and the circumferential direction 120.

Within the context of the present disclosure, the "equatorial plane" refers to a plane which is perpendicular to the axial direction 130 and cuts the section width of the tire in two halves of equal width. Thus, the equatorial plane is parallel to the yz-plane and corresponds to the widthwise centerline of the tread.

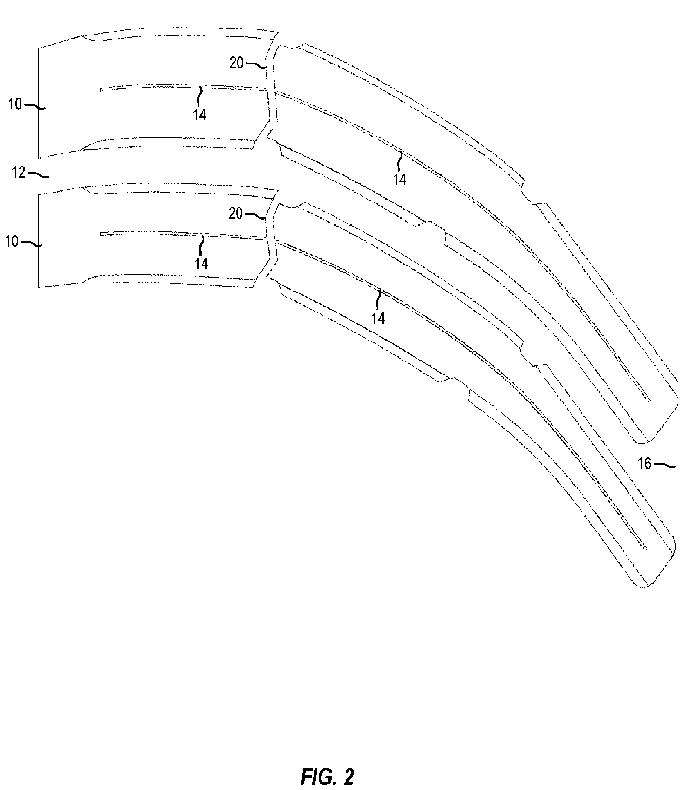

Fig. 2 illustrates a half tread profile of a tire according to the present disclosure.

According to Fig. 2, the tread of the tire comprises a set of consecutive blocks 10 arranged along a circumference of the tire. "Consecutive blocks" in within the context of this disclosure means that the tread comprises multiple blocks following one another in succession over the circumference of the tire. While it is preferred that the invention as claimed is provided for all blocks of the tire, it is possible that some blocks, which may be arranged between individual blocks 10 of the set of consecutive blocks, do not fulfil all claimed requirements.

In some embodiments, described in more detail elsewhere herein, the tread comprises further blocks on the other side of the equatorial plane 16 of the tire. In some embodiments described elsewhere herein, these further blocks may have axisymmetric configuration with respect to the blocks 10 shown in Fig. 2, such that the overall pattern is V-shaped. In other embodiments described elsewhere herein, the further blocks may be point-symmetric, such that the overall pattern is S-shaped. In any case, the present disclosure is not directed at a specific orientation of the blocks but can be applied to blocks of various shapes and orientations.

Moreover, while the present disclosure is described with respect to tread patterns which are generally symmetric, i.e., having same or similar tread configuration on both sides of the equatorial plane 16, it will be understood that the concept described herein can also be applied in asymmetric tread patterns, i.e., in patterns having substantially different tread configurations on both sides of the equatorial plane of the tire.

Generally, the blocks 10 have the purpose of providing contact to the ground when the tire is in rolling condition. The edges as well as the surfaces of the blocks are configured to provide a friction force between the tire and the ground for grip, allowing general roadholding as well as movement control of the vehicle by a driver of a vehicle by acceleration, breaking or steering.

According to Fig. 2, the tread further comprises a plurality of first grooves 12 arranged over the circumference of the tire, wherein each of the plurality of first grooves 12 is arranged between two blocks 10 of the set of consecutive blocks. Preferably, the grooves 12 start near the equatorial plane 16 of the tire and extend towards a shoulder end of the tread to open at the outer edge of the tire. The grooves 12 are generally delimited by the adjacent blocks 10.

The purpose of the grooves 12 is mainly the drainage of water from the contact patch by guiding the water along the groove 10 towards the shoulder of the tire and eject the water from there, as the tire rolls on the ground. Thus, the grooves 12 provide for improved performance of the tire, especially in wet road conditions. Further, as the grooves delimit the consecutive blocks, they also provide edges for the blocks for improved snow performance. Moreover, the grooves allow for improved wear performance, as they allow more flexibility of the tread elements, such that slippage of the blocks over the ground is reduced, leading to a decrease in the abrasion effects leading to wear.

According to Fig. 2, the tread may further comprise a plurality of second grooves 20, extending through each of the set of blocks 10 substantially circumferentially. In some embodiments, the second groove 20 may cut through the whole block 10. In other embodiments, the second groove 20 may only be arranged in parts of the circumferential extension of the block 10. Thus, the second groove 20 may be arranged at a circumferentially central part of the block 10 or may be arranged to merely interrupt one or more edges of the block 10. In some embodiments, each second groove 20 may be arranged as a substantially straight line, e.g., with a small inclination with respect to the circumferential direction; in other embodiments, as shown for example in Fig. 2, each second groove 20 may be arranged with a zigzag form, e.g., including three differently inclined parts. Such zigzag form of the second groove 20 allows for a partial interruption of the strain and slippage behavior of the tire, thus improving the distribution of wear energy over the axial extension of the block 10.

The second grooves generally have the purpose of decoupling a portion of the block 10 near the shoulder of the tire, sometimes denoted as "shoulder portion", from portions of the block arranged axially more inwardly. For example, during acceleration or breaking, the shoulder portion of the block 10 may be especially strained because it is arranged generally perpendicularly to a circumferential direction of the tire. This may lead to deformation of the block 10 in the shoulder portion. To ensure good steering performance as well as lateral road holding also during breaking and acceleration, it is thus desirable to mechanically decouple the shoulder portion from the rest of the block 10. This decoupling is preferably achieved by providing a second groove 20 therebetween. This way, the second portion still provides for lateral road holding and steering performance despite the deformation of the shoulder portion. A wider second groove improves the decoupling effect compared to a second groove of smaller width.

According to Fig. 2, the tread may further comprise a plurality of sipes 14. In the shown tread pattern, each of the plurality of sipes 14 may extend substantially along a shape of each of the set of consecutive blocks 10. However, other arrangements and shapes of the sipes on the outer tread surface are also possible, for example wavy shapes, zigzag shapes, and the like. The sipes do not necessarily have to follow the shape of the block. For example, the sipes may only be included along a part of the shape of the block, or have a different angle of inclination than the underlying block or portion of the block with respect to the circumferential direction. Also, while some sipes may have walls extending radially towards a center of the tire, some sipes may also have wavy shapes, zigzag shapes or the like in radial direction. Moreover, such sipes may also be inclined with respect to the radial direction. Some sipes may comprise protrusions near a bottom of the sipe.

Sipes 14 are capable of trapping snow therein and providing an additional edge of the tread. This improves traction on snow-covered grounds.

The plurality of sipes 14 define an edge ingredient (EI) corresponding to the ratio between a sum of projected lengths of the plurality of sipes in an axial direction (SAP) and the circumference of the tread (C), such that

$$EI = \frac{\sum SAP}{C}, \qquad\qquad (1)$$

wherein the EI is at least 2 and at most 20. Preferably, the EI may be at least 2 and at most 16, more preferably at least 2 and at most 15.

The circumference C of the tire is measured at the radially outermost ring of the tire in inflated condition. For the inflation pressure and ambient temperature, the same specifications as described below for tire footprint measurements apply.

A high edge ingredient provides for better capacity for trapping snow, which improves the traction of the tire on snow-covered ground. However, a high edge ingredient also leads to a low stiffness of the blocks, which generally worsens breaking/acceleration performance on dry ground. An edge ingredient in one of the above ranges provides a particularly good tradeoff between traction on snow-covered grounds and braking/acceleration performance on dry ground.

The tire according to Fig. 2 may further have a void volume, being the volume of all grooves, sipes and recesses provided in the tread, and a volume of rubber provided in the tread, together making up the total volume of the tread. I.e., if the total volume of the tire is $V_T$, the void volume being $V_V$ and the rubber volume being $V_R$, then the total volume $V_T$ would be $V_T = V_V + V_R$. In a preferred embodiment, the ratio $V_V/V_R$ between the void volume $V_V$ and the rubber volume $V_R$ may be at least 0.20 and at most 0.40. Preferably, the ratio $V_V/V_R$ may be at least 0.24 and at most 0.37, more preferably at least 0.28 and at most 0.35. The ratio $V_V/V_R$ is directly linked to the stiffness of the tread profile. Thus, a higher ratio $V_V/V_R$ indicates a higher amount of void in the tread, which leads to lower stiffness of the tread, and thus benefits snow performance. A lower ratio $V_V/V_R$ indicates a higher amount of rubber in the tread, which leads to higher stiffness and thus increases breaking performance. A void to rubber ratio in the specified range provides optimal tradeoff between snow and dry performance, providing a tire which exhibits good breaking performance on dry ground as well as good traction on snow-covered grounds.

According to Fig. 2, each of the set of consecutive blocks 10 may comprise a leading edge and a trailing edge.

In the context of this disclosure, "leading edge", sometimes also denoted as "traction edge", refers to the edge of the block that, when a longitudinal traction force is applied to the tire reacts mostly to such force. Typically, the "leading edge" is the edge of a block which is of greater length than the lateral edges of the block, and which first encounters the ground as the block of a tire rolling in a preferred rolling direction enters the contact patch of the tire with the ground.

"Trailing edge", sometimes also denoted as "breaking edge", refers to the edge of the block that, when a longitudinal breaking force is applied to the tire reacts mostly to such force. Typically, the "trailing edge" is the edge of the block which is of greater length than the lateral edges of the block, and which is the last edge to lose contact with the ground as the block of the tire rolling in a preferred rolling direction leaves the contact patch of the tire with the ground.

According to Fig. 2, each one of the set of consecutive blocks may further comprise a chamfer arranged at least at one of the leading edge and the trailing edge.

Within the context of the present disclosure, "chamfer" means an inclined side wall of a block which extends from the outer block surface radially inward. The wall is inclined such that the width of the block measured in circumferential direction increases towards the bottom of the groove. Each chamfer is defined by a height and a width. The chamfer height may correspond to the distance between the outer block surface and the radially innermost end of the inclined wall, measured in radial direction. The height of a chamfer (= distance between the outer block surface and the radially innermost end of the inclined wall) is usually lower than the total height of the block, and may for example be at most 50% or less than the total height of the block. The width of the chamfer may be measured perpendicular to the block and corresponds to the width of the inclined chamfer wall when projected onto the outer tread surface.

Chamfers on the trailing edge contribute to dry breaking performance. As a vehicle breaks, due to the inertia of the vehicle's mass, tread blocks are deformed and bend. This way, some of the rubber surface which is arranged towards the leading edge of the block loses contact with the road surface, thus reducing the contact surface of each block. A reduced contact surface leads to reduced friction force, which thus impairs the breaking performance of the tire.

By providing a chamfer on the trailing edge, the inclined surface of the chamfer is pushed towards the ground during breaking as the block bends, thus increasing the rubber surface. This way, surface loss at the leading end of the block can be compensated and the contact surface is increased, which leads to better breaking performance by an increased friction force. Consequently, a chamfer on the trailing edge of the block contributes to dry and wet breaking performance.

A chamfer on the leading edge has proven to work efficiently to contribute to traction, especially on snow-covered grounds. Generally, in order to increase traction on snow-covered grounds, the surface area of a block should be reduced, to allow for increased contact pressure between the block surface and the ground. Providing the chamfer on the leading edge has shown to be a good location for reducing the area of the block surface. The increased contact pressure provided due to the chamfer on the leading edge, especially leading to a peak in contact pressure at the leading edge of the block, allows for the block, and especially the leading edge thereof, to dig into the snow more efficiently, thus increasing the traction of the tire on snow-covered grounds.

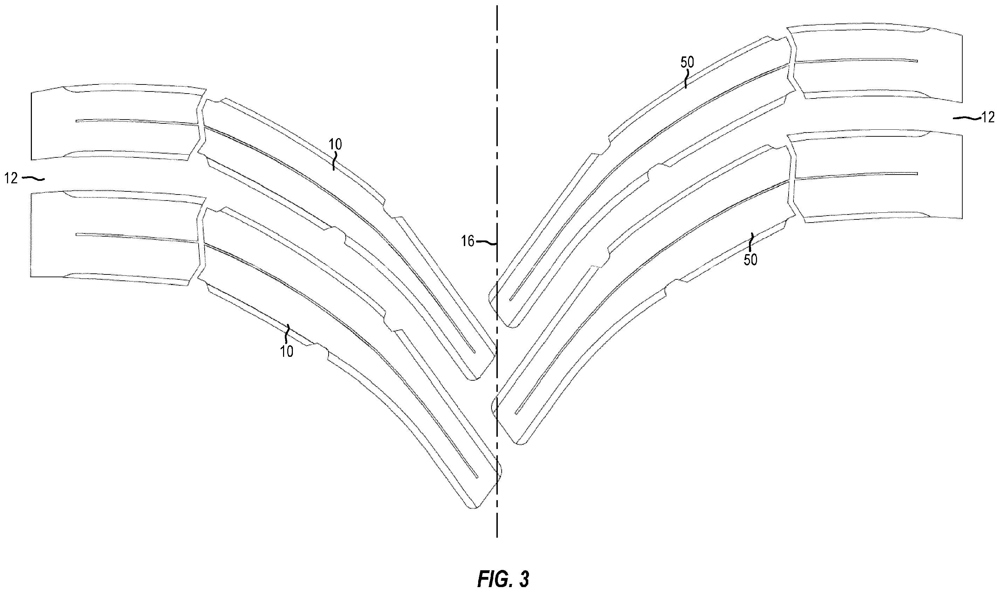

Fig. 3 illustrates an exemplary embodiment of a V-shaped directional tread pattern according to the present disclosure.

According to Fig. 3, some embodiments of the tread may comprise a second set of consecutive blocks 50, generally corresponding to the first set of consecutive blocks 10, which is arranged at an opposite side of the equatorial plane 16 of the tire. In some embodiments, as illustrated in Fig. 3, the second set of consecutive blocks 50 can be provided axisymmetric to the first set of blocks 10, leading to a V-shaped tread pattern which has a preferred rolling direction. The V shape provides the advantage of improved water drainage properties, because, when the tire rolls in the preferred rolling direction, water can be ejected from the contact patch by means of two opposite first grooves in opposite axial directions of the tread. Thus, traction on wet roads can be improved. While the directional pattern with the preferred rolling direction is advantageous for wet road surfaces, other embodiments are possible.

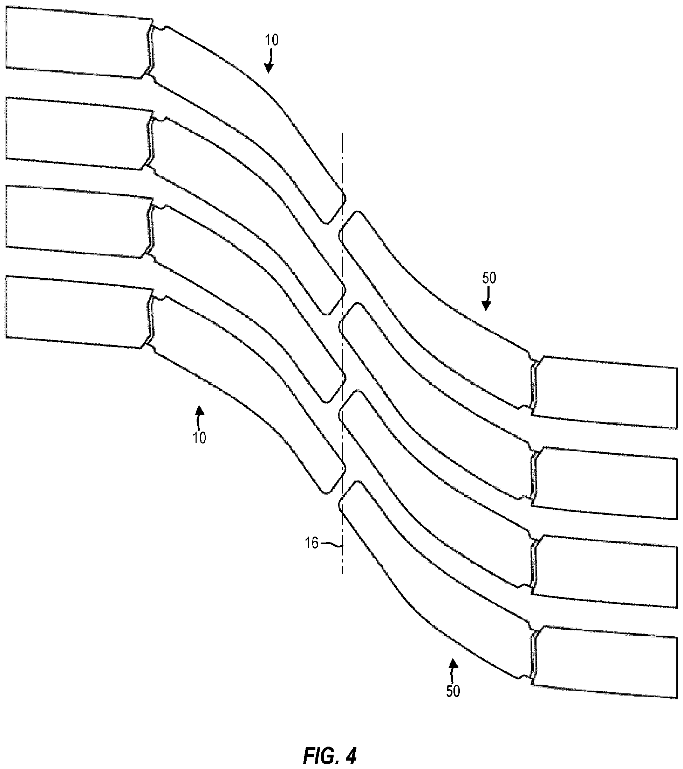

For example, Fig. 4 illustrates an exemplary embodiment of an S-shaped tread pattern according to the present disclosure.. For some embodiments, according to Fig. 4, the tread may comprise a second set of consecutive blocks 50 in addition to the first set of consecutive blocks 10. The second set of consecutive blocks 50 may be arranged on an opposite side of the equatorial plane 16 of the tire. In contrast to the above-described embodiment comprising a V-shaped tread pattern, the second set of consecutive blocks 50 may be provided point-symmetric to the first set of blocks 10, leading to an S-shaped tread pattern which does not have preferred rolling direction.

**Tire footprint measurement**

Within the context of this disclosure, a "tire footprint" means all parts of the tire that come into contact with the ground when the tire is in rolling condition. The tire footprint gives information about the behavior of a tread profile in rolling condition, i.e., from the tire footprint it can be seen, which parts of the blocks come into contact with the ground under static loading conditions.

When analyzing a tire footprint, generally, the respective tire is inflated, with the pressure depending on the type of the tire. For a standard radial passenger tire with nominal section widths of 195 mm and below, a tire pressure of 1.9 bar is used. For a standard radial passenger tire with nominal section widths of 205 mm and above, a tire pressure of 2.0 bar is used. For reinforced radial passenger tires of all sizes, a pressure of 2.3 bar is used. For tires of commercial vans, trucks, etc., the standardized inflation pressure according to the European Tyre and Rim Technical Organisation (ETRTO) is used. All measurements are conducted under room ambient temperature.

The tire is then loaded at the following load conditions: For a radial passenger tire, the tire is loaded with weight corresponding to 88% of the tire load index according to ETRTO charts. Tires for commercial vans, trucks, etc. are loaded with weight corresponding to the ETRTO single load rated standard. To conduct the measurement, ink may be applied to the tread profile and the tire may then be pushed against a card according to the above specifications, leaving an ink footprint which can then be analyzed. A footprint is evaluated on three tire portions which are equally spaced by 120° over the circumference of the tire. The metrics that are analyzed in the footprint are then averaged over the three measured portions.

**Tire void volume and rubber volume measurement**

The tire void volume in the context of this application is also measured in footprint condition. I.e., the tire is inflated in the same way as described above with respect to the tire footprint measurement. The void volume is measured by a laser measurement system which is capable of detecting, for each pixel, a depth of the void with respect to the tread surface. By this, a total void volume in the contact patch can be calculated by integrating over all measured pixels. The total tread volume can be calculated as the product of the footprint width (FW) and the circumference (C) of the tire, divided by the weighed mean depths of the first grooves. The total rubber volume is then the difference between the total tread volume and the total void volume.

Measurement values given in the present disclosure refer to measurements conducted in footprint condition and on new tires, which have not been exposed to wear before the measurement.

**Rubber Composition**

The tread of the tire of the present invention is made of a rubber composition which has a specific elastic modulus E'. According to the present invention, the rubber composition has an E' at -20°C of at least 20 MPa and at most 60 MPa. Preferably, the rubber composition has an E' at -20°C of at least 25 MPa and at most 45 MPa. In further preferred embodiments, the rubber composition has an E' at 30°C of at least 7.0 and at most 25 MPa, preferably an E' at 30°C of at least 10.0 MPa and at most 18 MPa. The parameter E' means the elastic modulus at the indicated temperature, i.e., -20°C, or 30°. E' is measured according to ISO 4664.

In preferred embodiments, the rubber composition comprises at least a rubber component, a resin component, and a filler component. According to the present disclosure, the resin component is a blend of at least two hydrocarbon resins A and B. Hydrocarbon resin A is different to hydrocarbon resin B.

In more preferred embodiments, the hydrocarbon resin A is a rosinic resin, and hydrocarbon resin B is selected from a group of hydrocarbon resins including a terpenic resin. In preferred embodiments, hydrocarbon resin B includes 30 to 100 weight-% of terpenic resin, preferably 80 to 100 weight-% of terpenic resin. In exemplary embodiments, hydrocarbon resin A is a rosinic resin, and hydrocarbon resin B is a terpenic resin. In further preferred embodiments, the resin component comprises the rosinic resin (hydrocarbon resin A) and the hydrocarbon resin B in a ratio of at least 1.2, preferably in a ratio of at least 1.2 to at most 4.0. In exemplary embodiments, the ratio of hydrocarbon resin A to hydrocarbon resin B is at least 1.5 to at most 3.5, at least 1.7 to at most 3.3, or at least 2.0 to at most 3.0. In exemplary embodiments, the resin component is present in the rubber composition in an amount of at least 25 phr, preferably in an amount of at least 30 phr to at most 80 phr, more preferably in an amount of at least 35 phr to 70 phr.

The rosinic resin is preferably selected from rosinic-based resins having a glass transition temperature of at least 20 °C, more preferably of at least 40°C. Rosinic resins or rosinic-based resins are a solid form of resins obtained from pines and other plants, e.g., conifers. It contains functional groups, which can be aromatic carboxylic functional groups. In the present disclosure, the hydrocarbon resin B is selected from the generic class of hydrocarbon resins. These hydrocarbon resins typically are selected from the group consisting of cyclopentadiene homopolymer or copolymer resins (abbreviated as CPD), dicyclopentadiene homopolymer or copolymer resins (abbreviated as DCPD), terpene homopolymer or copolymer resins, C5 homopolymer or copolymer resins which may be partially or fully hydrogenated, C9 homopolymer or copolymer resins which may be partially or fully hydrogenated, alphamethyl-styrene homopolymer or copolymer resins, and combinations thereof. In the present disclosure, hydrocarbon resin B includes terpenic resins. Terpenic resins are preferably selected from terpenic-based resins. Terpenic resins or terpenic-based resins are natural resins from plants, e.g. conifers, and contain unsaturated hydrocarbon compounds that are derived from isoprene and have the formula $(C_5H_8)_n$ with n>1. Hydrocarbon resins and terpenic resins suitable as hydrocarbon resin B have a glass transition temperature of at least 55 °C, preferably of at least 65 °C. In preferred embodiments, the hydrocarbon resins A and B have a specific aromaticity, wherein the aromaticity is determined by NMR. Preferably, the hydrocarbons resin A (rosinic resin) has an aromaticity of at least 4.0, preferably of at least 5.0, and the hydrocarbon resin B and/or terpenic resin has an aromaticity of at most 3.0, preferably of at most 2.0.

The table hereinafter shows resins which are particularly suitable as hydrocarbon resin A and hydrocarbon resin B, respectively.

| Parameter | Terpenic based/Hydrocarbon resin | Rosinic Based resin |
|---|---|---|
| Softening Point °C* | ≥100 | ≥95 |
| Tg °C | ≥65 | ≥20 |
| Aromaticity by NMR | ≤2.0 | ≥5.0 |
| *Softening point of a material is the temperature at which the material softens beyond a certain softness, which is measured using a ring and ball apparatus according to ISO 4625. | | |

Herein the Tg (glass transition temperature) refers to a measurement by DSC (Differential Scanning Calorimetry) according to standard ASTM D3418 (1999).

In preferred embodiments, the rubber component of the rubber composition comprises at least one rubber selected from the group consisting of styrene butadiene rubber (SBR), butadiene rubber (BR), natural rubber (NR), and isoprene rubber (IR). Preferably, the rubber component comprises at least a styrene butadiene rubber. In other preferred embodiments, the rubber composition comprises a styrene butadiene rubber and another rubber selected from the group consisting of butadiene rubber (BR), natural rubber (NR), and isoprene rubber (IR). Suitable rubber compositions contain styrene butadiene rubber in an amount of 40 to 80 phr and at least one further rubber in an amount of 60 to 20 phr. In preferred embodiments, the rubber component has a glass transition temperature (Tg) of at least -20 °C, preferably at least -20 °C to at most 110 °C°.

In preferred embodiments, the filler component of the rubber composition comprises at least an inorganic filler. In exemplary embodiments, the filler component additionally comprises carbon black. In preferred embodiments, the total amount of inorganic filler in the rubber composition is at least 70 phr to at most 200 phr, more preferably at least 80 phr to at most 180 phr, even more preferred at least 90 phr to at most 160 phr. In exemplary embodiments, the inorganic filler is selected from silica, mineral fillers, calcium carbonate, clay, alumina, aluminosilicates, and combinations thereof. The mineral filler can be of natural or synthetic origin, and can comprise alumina, aluminum (oxide) hydroxides, and/or magnesium oxide.

In exemplary embodiments, the rubber composition comprises a silane which functions to couple silica filler to polymer backbone by covalent bonding. Any silane that fulfils this function can be used. Suitable silane coupling agent may be one or more selected from the group consisting of bis(3-triethoxysilylpropyl) tetrasulfide, bis(3-triethoxysilylpropyl) trisulfide, bis(3-triethoxysilylpropyl) disulfide, bis(2-triethoxysilylethyl) tetrasulfide, bis(3-trimethoxysilylpropyl)tetrasulfide, bis(2-trimethoxysilylethyl) tetrasulfide, 3-mercaptopropyltrimethoxysilane, 3-mercaptopropyltriethoxysilane, 2-mercaptoethyltrimethoxysilane, 2-mercaptoethyltriethoxysilane, 3-trimethoxysilylpropyl-N,N-dimethylthiocarbamoyl tetrasulfide, 3-triethoxysilylpropyl-N,N-dimethylthiocarbamoyl tetrasulfide, 2-triethoxysilylethyl-N,N-dimethylthiocarbamoyl tetrasulfide, 3-trimethoxysilylpropylbenzothiazolyl tetrasulfide, 3-triethoxysilylpropylbenzothiazolyl tetrasulfide, 3-triethoxysilylpropylmethacrylate monosulfide, 3-trimethoxysilylpropylmethacrylate monosulfide, bis(3-diethoxymethylsilylpropyl) tetrasulfide, 3-mercaptopropyldimethoxymethylsilane, dimethoxymethylsilylpropyl-N,N dimethylthiocarbamoyl tetrasulfide, and dimethoxymethylsilylpropylbenzothiazolyl tetrasulfide. A commercially available silane is Si 69 which is bis(triethoxysilylpropyl) tetrasulfide. The silane can be present in an amount of 5 to 13 phr.

Suitable curing or vulcanization systems for the rubber composition of the present disclosure are subject to no restrictions and known in the art. Exemplary systems comprise sulfur, TbZTd (tetrabenzyl thiuram disulfide), DPG (diphenylguanidine), MBTS (mercapto benzothiazole salt), DCBS (N'-Dicyclohexyl-2-benzothiazole sulfenamide), CBS (N-cyclohexyl-2-benzothiazole sulfenamide), and/or TBBS (N-tert-butyl-2-benzothiazyl sulfenamide).

In exemplary embodiments, the rubber composition further comprises a liquid plasticizer, which may be selected from naphthenic, paraffinic, MES (mild extraction solvate), TDAE (treated distillate aromatic extract) oils, RAE (residual aromatic extract), mineral oils or vegetable oils. The rubber composition can comprise further additives, such as anti-degradation agents (such as antioxidants or anti-ozonants), waxes, and processing agents.

Suitable rubber compositions of the present disclosure are shown in the table hereinafter, wherein the table indicates preferred amounts of the respective components (in phr), unless indicated otherwise:

| FORMULATION | Preferred |
| --- | --- |
| BR | 20-60 |
| SBR | 80-40 |
| Inorganic filler | ≥70 |
| Carbon black | 3-20 |
| Silane | >5 |
| Liquid plasticizer | 5-30 |
| Terpenic/Hydrocarbon resin | 5-30 |
| Rosinic resin | 20-50 |
| Curing package* | Sulfur, TBzTD, DPG, MBTS, DCBS, CBS, TBBS |
| Total amount of Resin component | ≥ 30 |
| *The curing package refers to the components of the curing or vulcanization system. | |

The components of the rubber composition are kneaded in a manner known to the person skilled in the art and are subject to no restrictions.

The present invention also provides cured rubber compositions obtained after curing of the rubber composition of the present disclosure.

The examples hereinafter illustrate the invention without restricting the scope of protection.

**Examples**

In the following examples, rubber compositions were prepared and tested regarding the elastic modulus E'. The following resins were used:

| Source | Terpenic | Rosinic |
|---|---|---|
| **Softening Point °C** | 115 | 98 |
| **Tg °C** | 66 | 49 |
| **Aromaticity by NMR** | 1.0 | 6.5 |

A rubber composition was prepared by compounding the listed components according to the following formulation.

| FORMULATION | Amount (phr) |
|---|---|
| BR | 40 |
| SBR | 60 |
| Terpenic resin | 15 |
| Rosinic resin | 35 |
| TDAE | 3 |
| MES | 8 |
| Silica | 100 |
| Carbon black | 12 |
| Zinc oxide | 2 |
| Stearic acid | 2 |
| Silane* | 7 |
| Wax | 2.2 |
| 6PPD** | 1.9 |
| TMQ | 0.3 |
| Sulfur | 1.2 |
| CBS | 1.1 |
| DPG | 1.4 |
| TBZTD | 0.4 |
| *The silane used was Si 69. **N'-(1,3-dimethylbutyl)-N'-phenyl-1,4-benzenediamine | |

In addition, rubber compositions according to the above formulation were prepared, in which 50 phr of rosinic resin or 50 phr of terpenic resin were used, instead of 35 phr rosinic resin and 15 phr terpenic resins.

The cured rubber compositions were tested with regard to the elastic modulus E' at -20°C and E' at +30°C, wherein the measurement was made according to ISO 4664. Furthermore, the rubber compositions were evaluated with regard to their wet and snow performance. E' at -20 °C is a predictor for snow such that the higher the value is the worse the snow performance. The parameter E' at 30 °C is influencing wet and dry performance. The higher E' at 30 °C is the better wet performance is. The wet performance was evaluated in outside proving ground on wet braking track. Wet braking performance was evaluated as a function of the braking distance to pass from initial speed (80 km/h) to a final speed (20 km/h) on a wet surface. Snow performance was evaluated in outside proving ground on snow track. Snow performance was evaluated as average of snow braking performance, evaluated as a function of the braking distance to pass from initial speed (40 km/h) to a final speed (5 km/h) on a snow surface, and snow traction performance, evaluated as a function of the acceleration time (s) to pass from initial speed (5 km/h) to a final speed (35 km/h) on a snow surface.

The following results were obtained:

| Hydrocarbon resin | Terpenic | Blend | Rosinic |
|---|---|---|---|
| Wet | 100 | 107 | 103 |

(continued)

| Hydrocarbon resin | Terpenic | Blend | Rosinic |
|---|---|---|---|
| Snow | 100 | 102 | 98 |
| E' -20°C | 22 | 32 | 47 |
| E' 30°C | 9 | 13 | 17 |

As shown, the blend provides the best balance among the performances.

The results show that the use of a blend of hydrocarbon resins including rosinic and terpenic resins increase the material stiffness of the rubber composition in a manner that permits to compensate the decrease in stiffness caused by the sipes.

**List of reference numbers**

10, 50     block

12       first grooves

14       sipe

16       equatorial plane

20       second groove

100      tire

110      tread

120      circumferential direction

130      axial direction

140      radial direction

150      center

**Claims**

1. A tire (100) for a vehicle comprising a tread (110), the tread (110) comprising:

   a set of consecutive blocks (10, 50) arranged along a circumference of the tire (100); and
   a plurality of first grooves (12) arranged over the circumference of the tire (100), wherein each of the plurality of first grooves (12) is arranged between two blocks (10, 50) of the set of consecutive blocks (10, 50); **characterized by**
   a plurality of sipes (14) defining an edge ingredient, EI, corresponding to the ratio between a sum of projected lengths of the plurality of sipes (14) in an axial direction (130), SAP, and the circumference of the tread (110), C, such that

   $$EI = \frac{\sum SAP}{C},$$

   wherein the EI is at least 2 and at most 20; and
   wherein the tread (110) is made of a rubber composition having an elastic modulus E' at -20°C of at least 20 MPa and at most 60 MPa, when measured according to ISO 4664.

2. The tire of claim 1, wherein the tread (110) has a ratio between a void volume and a rubber volume of at least 0.20 and at most 0.40.

3. The tire of any one of the preceding claims, wherein each of the set of consecutive blocks (10, 50) comprises:

   a leading edge;
   a trailing edge; and
   a chamfer arranged at least at one of the leading edge and the trailing edge.

4. The tire of any one of the preceding claims, further comprising:

   a plurality of second grooves (20), wherein each of the second grooves (20) is arranged in one of the set of consecutive blocks (10, 50);
   the plurality of second grooves (20) arranged in substantially circumferential direction (120).

5. The tire of any one of the preceding claims, wherein the tire (100) has a preferred rolling direction.

6. The tire of any one of the preceding claims, wherein the rubber composition comprises at least a rubber component, a resin component, and a filler component, wherein the resin component is a blend of at least two hydrocarbon resins A and B.

7. The tire of claim 6, wherein the hydrocarbon resin A is a rosinic resin, and the hydrocarbon resin B is selected from the general group of hydrocarbon resins including a terpenic resin.

8. The tire of claim 7, wherein the hydrocarbon resin B includes 30 to 100 weight-% of terpenic resin.

9. The tire of claim 7 or 8, wherein the resin component comprises the rosinic resin and the hydrocarbon resin B in a ratio of at least 1.2, preferably in a ratio of at least 1.2 to at most 4.0.

10. The tire of any one of claims 6 to 9, wherein the amount of the resin component in the rubber composition is at least 25 phr.

11. The tire of any one of claims 7 to 10, wherein the rosinic resin is selected from rosinic-based resins having a glass transition temperature of at least 20 °C.

12. The tire of any one of claims 7 to 11, wherein the hydrocarbon resin B is selected from hydrocarbon resins having a glass transition temperature of at least 55 °C.

13. The tire of any one of claims 7 to 12, wherein the rosinic resin has an aromaticity of at least 4.0, and the hydrocarbon resin B and/or terpenic resin has an aromaticity of at most 3.0.

14. The tire of any one of claims 6 to 13, wherein the rubber composition comprises a rubber component comprising at least one rubber selected from the group consisting of styrene butadiene rubber (SBR), butadiene rubber (BR), natural rubber (NR), and isoprene rubber (IR), preferably the rubber component comprises at least a styrene butadiene rubber.

15. The tire of claim 14, wherein the rubber composition comprises a styrene butadiene rubber in an amount of 40 to 80 phr and at least one further rubber in an amount of 60 to 20 phr.

16. The tire of any one of claims 6 to 15, wherein the rubber component of the rubber composition has a glass transition temperature (Tg) of at least -20 °C to at most 110 °C.

17. The tire of any one of claims 6 to 16, wherein the filler component comprises at least an inorganic filler.

18. The tire of claim 17, wherein the total amount of the inorganic filler in the rubber composition is at least 70 phr to at most 200 phr, preferably wherein the inorganic filler is selected from silica, mineral filler, calcium carbonate, clay, alumina, aluminosilicates, and combination thereof.

19. The tire of any one of the preceding claims, wherein the rubber composition has an elastic modulus E' at -20°C of at least 25 MPa and at most 45 MPa, when measured according to ISO 4664.

20. The tire of any one of the preceding claims, wherein the rubber composition has an elastic modulus E' at 30°C of at least 7.0 MPa and at most 25 MPa, preferably at least 10.0 MPa and at most 18 MPa, when measured according to ISO 4664.

21. Use of a tire according to any one of the preceding claims, as all-season tire for vehicles.

**Patentansprüche**

1. Reifen (100) für ein Fahrzeug, umfassend eine Lauffläche (110), die Lauffläche (110) umfassend:

   einen Satz aufeinanderfolgender Blöcke (10, 50), die entlang eines Umfangs des Reifens (100) angeordnet sind; und
   eine Vielzahl von ersten Rillen (12), die über den Umfang des Reifens (100) hinweg angeordnet sind, wobei jede der Vielzahl von ersten Rillen (12) zwischen zwei Blöcken (10, 50) des Satzes von aufeinanderfolgenden Blöcken (10, 50) angeordnet ist; **gekennzeichnet durch**
   eine Vielzahl von Lamellen (14), die einen Kantenbestandteil, EI, definieren, der dem Verhältnis zwischen einer Summe von projizierten Längen der Vielzahl von Lamellen (14) in einer axialen Richtung (130), SAP, und dem Umfang der Lauffläche (110) C, derart entspricht, dass

$$EI = \frac{\sum SAP}{C},$$

   wobei der EI mindestens 2 und höchstens 20 beträgt; und
   wobei die Lauffläche (110) aus einer Kautschukzusammensetzung hergestellt ist, die einen elastischen Modul E' bei -20 °C von mindestens 20 MPa und höchstens 60 MPa aufweist, wenn gemessen nach ISO 4664.

2. Reifen nach Anspruch 1, wobei die Lauffläche (110) ein Verhältnis zwischen einem Hohlraumvolumen und einem Kautschukvolumen von mindestens 0,20 und höchstens 0,40 beträgt.

3. Reifen nach einem der vorstehenden Ansprüche, wobei jeder des Satzes aufeinanderfolgender Blöcke (10, 50) umfasst:

   eine Vorderkante;
   eine Hinterkante; und
   eine Fase, die mindestens an einer der Vorderkante und der Hinterkante angeordnet ist.

4. Reifen nach einem der vorstehenden Ansprüche, ferner umfassend:

   eine Vielzahl von zweiten Rillen (20), wobei jede der zweiten Rillen (20) in einem des Satzes aufeinanderfolgender Blöcke (10,50) angeordnet ist;
   die Vielzahl von zweiten Rillen (20), die in im Wesentlichen umlaufender Richtung (120) angeordnet sind.

5. Reifen nach einem der vorstehenden Ansprüche, wobei der Reifen (100) eine bevorzugte Rollrichtung aufweist.

6. Reifen nach einem der vorstehenden Ansprüche, wobei die Kautschukzusammensetzung mindestens eine Kautschukkomponente, eine Harzkomponente und eine Füllstoffkomponente umfasst, wobei die Harzkomponente eine Mischung aus mindestens zwei Kohlenwasserstoffharzen A und B ist.

7. Reifen nach Anspruch 6, wobei das Kohlenwasserstoffharz A ein Kolophoniumharz ist und das Kohlenwasserstoffharz B ausgewählt ist aus der allgemeinen Gruppe von Kohlenwasserstoffharzen einschließlich eines Terpenharzes.

8. Reifen nach Anspruch 7, wobei das Kohlenwasserstoffharz B 30 bis 100 Gew.-% Terpenharz einschließt.

9. Reifen nach Anspruch 7 oder 8, wobei die Harzkomponente das Kolophoniumharz und das Kohlenwasserstoffharz B in einem Verhältnis von von mindestens 1,2, vorzugsweise in einem Verhältnis von mindestens 1,2 bis höchstens 4,0 umfasst.

10. Reifen nach einem der Ansprüche 6 bis 9, wobei die Menge der Harzkomponente in der Kautschukzusammensetzung mindestens 25 phr beträgt.

11. Reifen nach einem der Ansprüche 7 bis 10, wobei das Kolophoniumharz ausgewählt ist aus kolophoniumbasierten Harzen mit einer Glasübergangstemperatur von mindestens 20 °C.

12. Reifen nach einem der Ansprüche 7 bis 11, wobei das Kohlenwasserstoffharz B ausgewählt ist aus Kohlenwasserstoffharzen mit einer Glasübergangstemperatur von mindestens 55 °C.

13. Reifen nach einem der Ansprüche 7 bis 12, wobei das Kolophoniumharz eine Aromatizität von mindestens 4,0 aufweist und das Kohlenwasserstoffharz B und/oder Terpenharz eine Aromatizität von höchstens 3,0 aufweist.

14. Reifen nach einem der Ansprüche 6 bis 13, wobei die Kautschukzusammensetzung eine Kautschukkomponente umfasst, die mindestens einen Kautschuk umfasst, der aus der Gruppe ausgewählt ist, bestehend aus Styrol-Butadien-Kautschuk (SBR), Butadien-Kautschuk (BR), Naturkautschuk (NR) und Isopren-Kautschuk (IR), vorzugsweise wobei die Kautschukkomponente mindestens einen Styrol-Butadien-Kautschuk umfasst.

15. Reifen nach Anspruch 14, wobei die Kautschukzusammensetzung einen Styrol-Butadien-Kautschuk in einer Menge von 40 bis 80 phr und mindestens einen weiteren Kautschuk in einer Menge von 60 bis 20 phr umfasst.

16. Reifen nach einem der Ansprüche 6 bis 15, wobei die Kautschukkomponente der Kautschukzusammensetzung eine Glasübergangstemperatur (Tg) von mindestens -20 °C bis höchstens 110 °C aufweist.

17. Reifen nach einem der Ansprüche 6 bis 16, wobei die Füllstoffkomponente mindestens einen anorganischen Füllstoff umfasst.

18. Reifen nach Anspruch 17, wobei die Gesamtmenge des anorganischen Füllstoffs in der Kautschukzusammensetzung mindestens 70 phr bis höchstens 200 phr beträgt, vorzugsweise wobei der anorganische Füllstoff ausgewählt ist aus Kieselerde, mineralischem Füllstoff, Calciumcarbonat, Ton, Tonerde, Aluminosilikaten und Kombination davon.

19. Reifen nach einem der vorstehenden Ansprüche, wobei die Kautschukzusammensetzung einen elastischen Modul E' bei -20 °C von mindestens 25 MPa und höchstens 45 MPa aufweist, wenn gemessen nach ISO 4664.

20. Reifen nach einem der vorstehenden Ansprüche, wobei die Kautschukzusammensetzung einen elastischen Modul E' bei 30 °C von mindestens 7,0 MPa und höchstens 25 MPa, vorzugsweise wobei mindestens 10,0 MPa und höchstens 18 MPa aufweist, wenn gemessen nach ISO 4664.

21. Verwendung eines Reifens nach einem der vorstehenden Ansprüche als Ganzjahresreifen für Fahrzeuge.

## Revendications

1. Pneumatique (100) pour un véhicule comprenant un fil (110), le fil (110) comprenant :

   un ensemble de blocs consécutifs (10, 50) agencés le long d'une circonférence du pneumatique (100) ; et
   une pluralité de premières rainures (12) agencées sur la circonférence du pneumatique (100), dans lequel chacune de la pluralité de premières rainures (12) est agencée entre deux blocs (10, 50) de l'ensemble de blocs consécutifs (10, 50) ; **caractérisé par**
   une pluralité de lamelles (14) définissant un ingrédient de bord, EI, correspondant au rapport entre une somme de longueurs projetées de la pluralité de lamelles (14) dans une direction axiale (130), SAP, et la circonférence du fil (110), C, de telle sorte que

$$EI = \frac{\sum SAP}{C},$$

dans lequel l'EI est d'au moins 2 et d'au plus 20 ; et

dans lequel le fil (110) est constitué d'une composition de caoutchouc ayant un module d'élasticité E' à -20 °C d'au moins 20 MPa et d'au plus 60 MPa, lorsqu'il est mesuré selon la norme ISO 4664.

2. Pneumatique selon la revendication 1, dans lequel le fil (110) a un rapport entre un volume de vide et un volume de caoutchouc est d'au moins 0,20 et d'au plus 0,40.

3. Pneumatique selon l'une quelconque des revendications précédentes, dans lequel chacun de l'ensemble de blocs consécutifs (10, 50) comprend :

un bord d'attaque ;
un bord de fuite ; et
un chanfrein agencé au moins au niveau de l'un parmi le bord d'attaque et le bord de fuite.

4. Pneumatique selon l'une quelconque des revendications précédentes, comprenant :

une pluralité de secondes rainures (20), dans lequel chacune des secondes rainures (20) est agencée dans l'un de l'ensemble de blocs consécutif (10, 50) ;
la pluralité de secondes rainures (20) agencées dans une direction sensiblement circonférentielle (120).

5. Pneumatique selon l'une quelconque des revendications précédentes, dans lequel le pneumatique (100) a une direction de roulement préférée.

6. Pneumatique selon l'une quelconque des revendications précédentes, dans lequel la composition de caoutchouc comprend au moins un composant de caoutchouc, un composant de résine et un composant de charge, dans lequel le composant de résine est un mélange d'au moins deux résines hydrocarbonées A et B.

7. Pneumatique selon la revendication 6, dans lequel la résine hydrocarbonée A est une résine rosinique, et la résine hydrocarbonée B est choisie dans le groupe général de résines hydrocarbonées comportant une résine terpénique.

8. Pneumatique selon la revendication 7, dans lequel la résine hydrocarbonée B comporte de 30 à 100 % en poids de résine terpénique.

9. Pneumatique selon la revendication 7 ou 8, dans lequel le composant de résine comprend la résine rosinique et la résine hydrocarbonée B dans un rapport d'au moins 1,2, de préférence dans un rapport d'au moins 1,2 à au plus 4,0.

10. Pneumatique selon l'une quelconque des revendications 6 à 9, dans lequel la quantité du composant de résine dans la composition de caoutchouc est d'au moins 25 pcc.

11. Pneumatique selon l'une quelconque des revendications 7 à 10, dans lequel la résine rosinique est choisie parmi des résines à base de rosinique ayant une température de transition vitreuse d'au moins 20 °C.

12. Pneumatique selon l'une quelconque des revendications 7 à 11, dans lequel la résine hydrocarbonée B est choisie parmi des résines hydrocarbonées ayant une température de transition vitreuse d'au moins 55 °C.

13. Pneumatique selon l'une quelconque des revendications 7 à 12, dans lequel la résine rosinique a une aromaticité d'au moins 4,0, et la résine hydrocarbonée B et/ou la résine terpénique ont une aromaticité d'au plus 3,0.

14. Pneumatique selon l'une quelconque des revendications 6 à 13, dans lequel la composition de caoutchouc comprend un composant de caoutchouc comprenant au moins un caoutchouc choisi dans le groupe constitué de caoutchouc butadiène styrène (SBR), caoutchouc butadiène (BR), caoutchouc naturel (NR) et caoutchouc isoprène (IR), de préférence le composant de caoutchouc comprend au moins un caoutchouc butadiène-styrène.

15. Pneumatique selon la revendication 14, dans lequel la composition de caoutchouc comprend un caoutchouc

15

butadiène-styrène dans une proportion de 40 à 80 pcc et au moins un autre caoutchouc dans une proportion de 60 à 20 pcc.

16. Pneumatique selon l'une quelconque des revendications 6 à 15, dans lequel le composant de caoutchouc de la composition de caoutchouc a une température de transition vitreuse (Tg) d'au moins -20 °C à au plus 110 °C.

17. Pneumatique selon l'une quelconque des revendications 6 à 16, dans lequel le composant de charge comprend au moins une charge inorganique.

18. Pneumatique selon la revendication 17, dans lequel la quantité totale de la charge inorganique dans la composition de caoutchouc est d'au moins 70 pcc à au plus 200 pcc, de préférence dans lequel la charge inorganique est choisie parmi la silice, la charge minérale, le carbonate de calcium, l'argile, l'alumine, les aluminosilicates, et une combinaison de ceux-ci.

19. Pneumatique selon l'une quelconque des revendications précédentes, dans lequel la composition de caoutchouc a un module d'élasticité E' à -20 °C d'au moins 25 MPa et d'au plus 45 MPa, lorsqu'il est mesuré selon la norme ISO 4664.

20. Pneumatique selon l'une quelconque des revendications précédentes, dans lequel la composition de caoutchouc a un module d'élasticité E' à 30 °C d'au moins 7,0 MPa et d'au plus 25 MPa, de préférence d'au moins 10,0 MPa et d'au plus 18 MPa, lorsqu'il est mesuré selon la norme ISO 4664.

21. Utilisation d'un pneumatique selon l'une quelconque des revendications précédentes, en tant que pneumatique toutes saisons pour véhicules.

FIG. 1

**FIG. 2**

FIG. 3

EP 4 438 340 B1

FIG. 4

**REFERENCES CITED IN THE DESCRIPTION**

**Patent documents cited in the description**

- WO 2021089964 A1

- EP 4019274 A1